(19)

Europäisches
Patentamt
European
Patent Office
Office européen
des brevets

(11)  **EP 1 920 228 B1**

(12)  **EUROPEAN PATENT SPECIFICATION**

(45) Date of publication and mention
of the grant of the patent:
**10.01.2018  Bulletin 2018/02**

(21) Application number: **06775955.5**

(22) Date of filing: **31.08.2006**

(51) Int Cl.:
***G01K 17/08*** *(2006.01)*

(86) International application number:
**PCT/DK2006/000468**

(87) International publication number:
**WO 2007/025545 (08.03.2007 Gazette 2007/10)**

(54) **A METHOD AND AN INSTALLATION FOR DISTRIBUTING HEATING COSTS**

VERFAHREN UND INSTALLATION ZUM VERTEILEN VON HEIZKOSTEN

PROCEDE ET INSTALLATION PERMETTANT DE REPARTIR LES COUTS DE CHAUFFAGE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **02.09.2005  DK 200501223**

(43) Date of publication of application:
**14.05.2008  Bulletin 2008/20**

(73) Proprietor: **Brunata International A/S
2960 Rungsted Kyst (DK)**

(72) Inventor: **HANSEN, Jens, Peter Fischer
2960 Rungsted Kyst (DK)**

(74) Representative: **Zacco Denmark A/S
Arne Jacobsens Allé 15
2300 Copenhagen S (DK)**

(56) References cited:
**WO-A-97/22863        WO-A-2004/057288
CH-A- 377 125         DE-A1- 2 532 497
DE-A1- 2 734 406      DE-A1- 4 409 185
GB-A- 2 058 357       US-A- 5 249 863**

**Description**

The invention relates to a method of measuring heat consumption in a room in a building, wherein the measurement comprises measurement of the difference between the temperature of a heat source and the room, respectively.

For many years it has been known to calculate a heat consumption based on the difference in temperature between a heat source and the room temperature.

It is thus well known to calculate the heat emission from a radiator as

$$Q = K\Delta t exp.k,$$

wherein K and k are constants. By summation of $\Delta t$, the heat consumption for a given period of time can be determined.

For instance, German patent publication No. 44 09 185 teaches a heat meter, wherein the mean temperature of the radiator and the mean temperature of the room are used. DE-A1-2734406 also reveals a heat consumption measuring device by which the consumed heat relies on the mean temperature of a heat radiator and its surrounding where the EMF of a thermocouple is formed by the temperature difference between the cold and hot junctions of the sensor being placed on the radiator and in the surrounding room, respectively. It is the object of the invention to provide a method of measuring heat consumption, wherein the heat consumption can be measured accurately over a given period of time and in a manner which is both reliable and inexpensive compared to the prior art.

This object is accomplished by the method of claim 1 whereby a mean temperature is measured for the heat source and the room, respectively, during a common, predetermined period of time; and that the heat consumption for said period of time is calculated at the end of the time period based on the two separate mean temperatures of the heat source and the room respectively at the end of the time period. With reference to the prior art mentioned above, it should be emphasized in this context that the mean temperatures mentioned in the patent disclosure concern the temperature of the place which physically represents an average temperature. For instance, it will be known that the average temperature of a radiator can be measured about 66 % upwards of the radiator, and, correspondingly, experience and standards show how the average temperature of a room is measured. Those values must not be mistaken for the calculation of a mean temperature over time as is the case with the present invention.

According to a preferred embodiment, a heat meter is arranged on a radiator and a heat meter is arranged in the room at a distance from the radiator for measuring the room temperature. These days it is very inexpensive to manufacture electronics for calculating and storing the time mean value, whereby it is possible, eg by means of an electronic reading head, to read the time mean temperature for a certain period of time. By reading the time mean value for a meter on the heat source and a meter for room temperature, measured over identical periods of time, it is possible to find a value for the heat consumption.

Now it is well-known to use several temperature meters to advantage, and they may be connected to each other, either via a wired network or via radio connections. A wired network is expensive to install, and radio connections also increase the cost and simultaneously contribute to increasing the level of the electromagnetic radiation in living quarters. Moreover, it is a well-known problem to have to configure a number of apparatuses to the effect that they are in communication with each other in a building without them interfering with other corresponding apparatuses in the building.

All of the above drawbacks are obviated by storing the time mean temperature for the temperature in a room sensor and in a meter on the radiator, due there being no need for those two meters to be in communication with each other when the heat calculation is based on the difference between the time mean value of the two meters.

The invention may involve the use of a heat meter comprising a temperature sensor for providing temperature information and comprising an electronic circuit for processing the temperature information, with a data storage for storing a time mean temperature during a predetermined period of time and comprising means for transferring the time mean temperature to another electronic circuit.

The invention also concerns an installation according to claim 9, for distributing the costs of heating the individual rooms in a building.

A combination of two meters on the radiator is known from WO 97/22863 and has many advantages, but also the disadvantage that the consumers are able to manipulate the measurement result eg by covering the meter with insulating material, whereby $\Delta t$ between the two meters becomes small. However, by combining this with a particular room sensor, such possible manipulation is eliminated.

It is a further advantage of the invention that it becomes possible to present the time mean temperature for the room and the heat source, respectively, to the consumers who are thereby able to continuously monitor their heat consumption, whereas the known summation of $\Delta t$ does not provide the consumers with any useful information. The invention will be explained in further detail by the following description of a number of embodiments, reference being made to the drawings, wherein:

Figure 1 shows a first embodiment of an installation according to the invention;

Figure 2 shows a block diagram for description of the method according to the invention;

Figure 3 schematically shows the components of an embodiment of a meter; while

Figure 4 shows an alternative embodiment of an installation according to the invention.

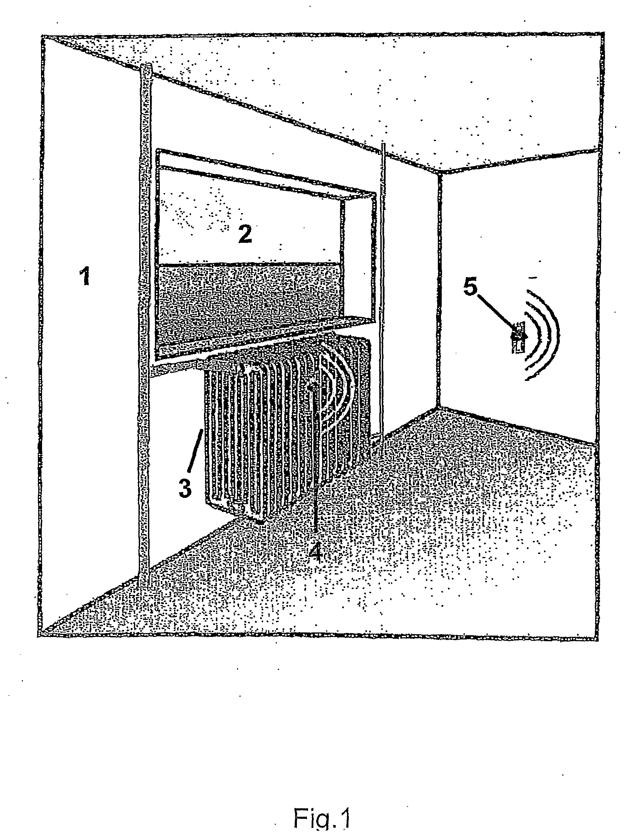

Figure 1 shows a room in a dwelling house comprising walls, floor and ceiling. In the wall 1 a window 2 is provided and underneath that, a heat source in the form of a radiator 3 is provided. It is noted that the invention is not limited to a particular heat source. For instance, a gas radiator may equally well be employed. It is thus also of absolutely no consequence whether the radiator is heated by means of electricity or a water-borne central heating system.

On the radiator 3 a heat meter 4 is arranged which, in a manner known per se, comprises a sensor being in heat-conducting contact with the radiator and comprising electronic circuits for performing calculations and storage of information from the sensor. Typically, the meter 4 is arranged at a height corresponding to 66 % of the height of the radiator, experience having shown such arrangement to entail that a temperature is measured which is equal to the mean temperature of the radiator surface. This also means that, in a manner known per se, one is able to calculate the power emitted by the radiator as:

$$Q = K\Delta t \exp.k,$$

wherein K and k are constants,
$\Delta t$ being the difference between the radiator's mean temperature and the room temperature. The temperature of the room varying a few degrees from floor to ceiling depending on the convection, ventilation, etc., it is of some consequence where the room temperature meter is arranged. A typical arrangement is about 1 m above floor and not on exterior walls. For instance, the room sensor may be provided as shown by the room sensor 5 in figure 1.

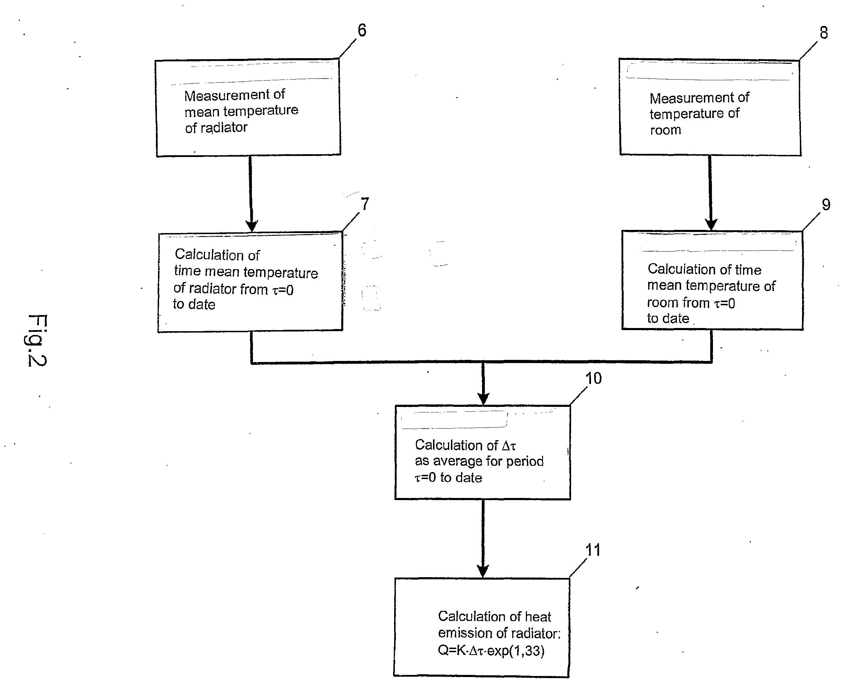

Figure 2 is a block diagram showing the principle according to the invention. The calculation processes taking place in blocks 6 and 7 are performed by the electronic circuits in the meter 4. The calculations in blocks 8 and 9 take place by means of electronic circuits in the room sensor 5, while the calculations appearing from blocks 10 and 11 are typically made elsewhere than in the meters 4 and 5.

By means of the sensor in the meter 4, one is able to measure the mean temperature of the radiator prevailing at any time, ie the current temperature of the radiator measured 66 % upwards thereof, as mentioned earlier. According to the invention, a time mean value is provided of the temperature of the radiator measured for a predetermined period of time. This can be provided eg by instantaneous measurements being performed of the mean temperatures of the radiators once a minute; and by adding all measurements and dividing by the number of minutes elapsed since the starting time, the mean time value of the radiator mean temperature is found. Thus, the time mean value is a calculation value which is, at any time, stored in the meter 4 and which, if desired, can be shown to the consumer.

In the block 8 measurements of the room temperature are performed which can also be done eg once a minute; and by adding the measurements and dividing by the number of minutes elapsed since the starting time, see block 9, the time mean value for the room temperature is found, since $\tau=0$.

Now the heat consumption can be calculated as is shown in blocks 10 and 11. First $\Delta t$ is calculated as the difference between the two time mean temperatures from blocks 7 and 9, it being, of course, important in this context that the values are calculated for a common period of time. The calculation formula will appear from block 11.

The calculations in blocks 10 and 11 can be provided by means of various physical methods.

A first method may consist in one having a separate electronic reading apparatus which - when taken to the vicinity of the meter 4 and/or 5 - is able to receive data wirelessly. Since it is possible hold a reading head close to the meters, the transmission method would typically be by means of infrared light. Instead of a meter reader having previously to read a meter on the radiator, all it takes now is to hold an electronic meter head in proximity of the radiator and room sensors.

Another method consists of providing the meters 4 and 5 with such powerful radio transmitter that they are able to send signals to a central which is common to the entire dwelling house. Thereby the reading procedure is made completely redundant, but in turn the meters become more expensive. For small installations one would prefer to use a reading head which is brought into close proximity of the meters, whereby it is possible to manufacture them at very low costs. It would otherwise be impossible to provide these advantages without calculating the time mean value as it is done in accordance with the invention.

A third method which may be used in very large dwelling houses, where a wired data network is already established, is to make use of such rather than transmitting the temperature information wirelessly.

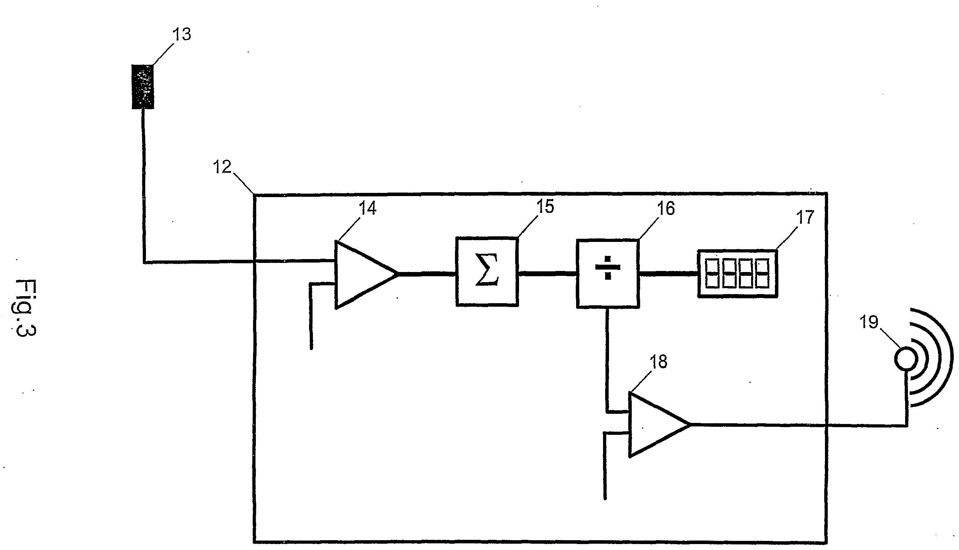

Figure 3 shows a block diagram for a meter according to the invention for exercising the method explained above in the context of figure 2.

The meter 12 comprises a temperature sensor 13 which is arranged in direct contact with the radiator surface and is configured for emitting a signal to a measurement amplifier 14. At fixed intervals, eg once a minute or every ten minutes, a measurement result from the sensor 13 is added in the block 15, following which, in block 16, a division is performed by the number of time periods elapsed since a predetermined period of time. The result is stored in a storage and can be shown in a display 17 and/or taken to an amplifier 18 which, by means of an antenna or infrared diode 19, is able to emit information about the time mean value stored at any time for the measure temperature. In case the time mean value is shown on a display 17, and this is done both for the radiator temperature and the room temperature, a consumer may himself keep an eye on how the heat bill increases as time goes by.

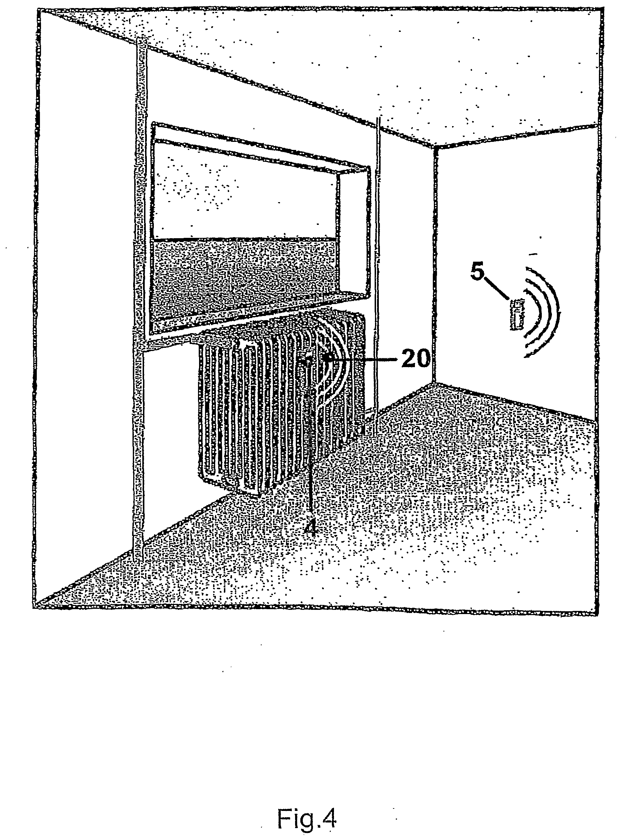

The embodiment shown in figure 4 of the plant according to the invention comprises, in addition to what was shown and explained in the context of figure 1, a further room sensor 20. It is known, for instance from WO 97/22863, to use a room sensor arranged on the radiator, but insulated in relation thereto, whereby it is possible to measure the room temperature. In principle, one may omit the room sensor 5, which is shown in both figures 1 and 3, but by using only radiator and room temperature meters that are both arranged on the radiator, the adverse option is open to the consumers that they may manipulate the measurement. For instance, by covering the room sensor on the radiator by means of a blanket or the like, the room sensor would instead measure a temperature which is approximately like the temperature of the radiator, whereby the $\Delta t$ measured - both instantaneously and as a mean value for a given period of time - would be very small. By supplementing with the room sensor 5 as shown in figure 4, it is possible to also take that kind of problems into consideration, as it will be understood that, according to the invention, the time mean temperature is continuously updated in all meters 4, 5, 20.

## Claims

1. A method of measuring heat consumption in a room in a building, wherein the measurement comprises measurement of the difference between the temperatures of a heat source and a room, respectively, **characterised in that** a time mean temperature is measured for the heat source and the room, respectively, during a common, predetermined period of time; and that the heat consumption for said period of time is calculated at the end of the time period based on the two separate mean temperatures of the heat source and the room respectively at the end of the time period.

2. A method according to claim 1, **characterised in that** the temperature meters are arranged close to and at a distance from, respectively, the heat source.

3. A method according to claim 1 or 2, **characterised in that** a room temperature sensor is arranged in the vicinity of the temperature meter of the heat source.

4. A method according to any one of claims 1-3, **characterised in that** the time mean temperatures are read separately.

5. A method according to claims 1-4, **characterised in that** the time mean temperatures are read by means of an electronic measuring head.

6. A method according to claim 2 or 3, **characterised in that** the information on at least the one time mean temperature is transferred to a place at a distance from the respective place of measurement.

7. A method according to claim 6, **characterised in that** the information is transferred via a wired network.

8. A method according to claim 6, **characterised in that** the information is transferred wirelessly.

9. An installation for distributing the costs of heating individual rooms in a dwelling house, the installation comprising

   • a first heat meter arranged on a heat source for measurement of its temperature and comprising a temperature sensor for providing temperature information and an electronic circuit for processing the temperature information; and
   • a second heat meter arranged in the room for measuring the temperature of the room and comprising a temperature sensor for providing temperature information and an electronic circuit for processing the temperature information,

   **characterized in that**
   each of said first and second heat meters is configured to

   • perform instantaneous temperature measurements at fixed intervals;
   • calculate after each measurement a time mean temperature of measurements performed for a period of time to date, said period of time being common for said first and second heat meters;
   • store said calculated time mean temperature in a data storage; and
   • transfer the time mean temperature to another electronic circuit;

   and that the installation further comprises

   • a reading apparatus configured to read at a given time the time mean temperature stored in the data storages of said first and second heat meters; and
   • a central configured to calculate from the time mean temperatures read from said first and second heat meters the heat consumption for a period of time up to said given time.

10. An installation according to claim 9, **characterised in that** the heat meter for measuring the time mean temperature of the room is arranged at a distance from the meter for measuring the temperature of the heat source.

11. An installation according to claim 9 or 10, **characterised in that** a heat meter for measuring the time mean temperature of the room is arranged close to the heat meter for measuring the temperature of the heat source.

12. An installation according to claims 9-11, **characterised in that** the meters are configured for being able to exchange data via a wired network.

13. An installation according to claims 9-12, **characterised in that** the meters are configured for being able to exchange information via a radio connenction.

**Patentansprüche**

1. Verfahren zum Messen eines Wärmeverbrauchs in einem Raum in einem Gebäude, wobei das Messen die Messung des Unterschieds zwischen den Temperaturen einer Wärmequelle bzw. eines Raums umfasst, **dadurch gekennzeichnet, dass** eine zeitliche Mitteltemperatur für die Wärmequelle bzw. den Raum während eines gemeinsamen vorbestimmten Zeitraums gemessen wird, und dass auf Grundlage der zwei getrennten Mitteltemperaturen der Wärmequelle bzw. des Raums am Ende des Zeitraums der Wärmeverbrauch für den Zeitraum am Ende des Zeitraums berechnet wird.

2. Verfahren nach Anspruch 1, **dadurch gekennzeichnet, dass** die Temperaturmesser nahe bzw. beabstandet von der Wärmequelle angeordnet sind.

3. Verfahren nach Anspruch 1 oder 2, **dadurch gekennzeichnet, dass** ein Raumtemperatursensor in der Nähe des Temperaturmessers der Wärmequelle angeordnet ist.

4. Verfahren nach einem der Ansprüche 1 bis 3, **dadurch gekennzeichnet, dass** die zeitlichen Mitteltemperaturen getrennt abgelesen werden.

5. Verfahren nach den Ansprüchen 1 bis 4, **dadurch gekennzeichnet, dass** die zeitlichen Mitteltemperaturen mittels eines elektronischen Messkopfes abgelesen werden.

6. Verfahren nach Anspruch 2 oder 3, **dadurch ge-**

**kennzeichnet, dass** die Informationen über die mindestens eine zeitliche Mitteltemperatur an einen vom jeweiligen Messort beabstandeten Ort übertragen werden.

7. Verfahren nach Anspruch 6, **dadurch gekennzeichnet, dass** die Informationen über ein drahtgebundenes Netz übertragen werden.

8. Verfahren nach Anspruch 6, **dadurch gekennzeichnet, dass** die Informationen drahtlos übertragen werden.

9. Installation zur Verteilung der Kosten für die Heizung einzelner Räume in einem Wohnhaus, welche Installation umfasst

   • einen ersten Wärmemesser, der an einer Wärmequelle angeordnet ist, um ihre Temperatur zu messen, und einen Temperatursensor zum Bereitstellen von Temperaturinformationen und eine elektronische Schaltung zur Verarbeitung der Temperaturinformationen umfasst; und
   • einen zweiten Wärmemesser, der im Raum angeordnet ist, um die Temperatur des Raums zu messen, und einen Temperatursensor zum Bereitstellen von Temperaturinformationen und eine elektronische Schaltung zur Verarbeitung der Temperaturinformationen umfasst,

   **dadurch gekennzeichnet, dass**
   jeder des ersten und zweiten Wärmemessers dazu ausgelegt ist,

   • in vorgegebenen Zeitabständen momentane Temperaturmessungen vorzunehmen;
   • nach jeder Messung eine zeitliche Mitteltemperatur von zu einem bestimmten Zeitpunkt bis jetzt vorgenommen Messungen zu berechnen, wobei der Zeitraum dem ersten und zweiten Wärmemesser gemeinsam ist;
   • die berechnete zeitliche Mitteltemperatur in einem Datenspeicher zu speichern; und
   • die zeitliche Mitteltemperatur an eine andere elektronische Schaltung zu übertragen;

   und dass die Installation ferner umfasst

   • ein Lesegerät, das dazu ausgelegt ist, zu einem festgelegten Zeitpunkt die zeitliche, in den Datenspeichern des ersten und zweiten Wärmemessers gespeicherte Mitteltemperatur abzulesen; und
   • eine Zentrale, die dazu ausgelegt ist, auf Grundlage der aus dem ersten und zweiten Wärmemesser ausgelesenen zeitlichen Mitteltemperaturen den Wärmeverbrauch über einen Zeitraum bis zum vorgegebenen Zeitpunkt zu berechnen.

**10.** Installation nach Anspruch 9, **dadurch gekennzeichnet, dass** der Wärmemesser zur Messung der zeitlichen Mitteltemperatur des Raums vom Messer zur Messung der Temperatur der Wärmequelle beabstandet angeordnet ist.

**11.** Installation nach Anspruch 9 oder 10, **dadurch gekennzeichnet, dass** ein Wärmemesser zur Messung der zeitlichen Mitteltemperatur des Raums nahe dem Wärmemesser zur Messung der Temperatur der Wärmequelle angeordnet ist.

**12.** Installation nach den Ansprüchen 9 bis 11, **dadurch gekennzeichnet, dass,** die Meter so ausgelegt sind, dass sie über ein drahtgebundenes Netz Daten austauschen können.

**13.** Installation nach den Ansprüchen 9 bis 12, **dadurch gekennzeichnet, dass,** die Messer so ausgelegt sind, dass sie über eine Funkverbindung Informationen austauschen können.

**Revendications**

**1.** Procédé de mesure de la consommation de chaleur dans une pièce d'un bâtiment, dans lequel la mesure comprend la mesure de la différence entre les températures respectivement d'une source de chaleur et d'une pièce, **caractérisé en ce qu'**une température moyenne temporelle est mesurée pour respectivement la source de chaleur et la pièce pendant une période de temps commune et prédéterminée; et que la consommation de chaleur pour ladite période de temps est calculée à la fin de la période de temps sur la base des deux températures moyennes séparées respectivement de la source de chaleur et de la pièce à la fin de la période de temps.

**2.** Procédé selon la revendication 1, **caractérisé en ce que** les thermomètres sont disposés respectivement à proximité et à distance de la source de chaleur.

**3.** Procédé selon la revendication 1 ou 2, **caractérisé en ce qu'**un capteur de température ambiante est disposé au voisinage du thermomètre de la source de chaleur.

**4.** Procédé selon l'une quelconque des revendications 1 à 3, **caractérisé en ce que** les températures moyennes temporelles sont lues séparément.

**5.** Procédé selon l'une quelconque des revendications 1 à 4, **caractérisé en ce que** les températures moyennes temporelles sont lues au moyen d'une tête de mesure électronique.

**6.** Procédé selon la revendication 2 ou 3, **caractérisé en ce que** l'information sur au moins une température moyenne temporelle est transférée à un emplacement situé à une distance de l'emplacement de mesure respectif.

**7.** Procédé selon la revendication 6, **caractérisé en ce que** l'information est transférée via un réseau filaire.

**8.** Procédé selon la revendication 6, **caractérisé en ce que** l'information est transférée sans fil.

**9.** Installation pour répartir les coûts de chauffage des pièces individuelles dans une maison d'habitation, l'installation comprenant

   • un premier compteur d'énergie thermique disposé sur une source de chaleur pour mesurer la température de celle-ci et comprenant un capteur de température pour fournir des informations de température et un circuit électronique pour traiter les informations de température; et
   • un deuxième compteur d'énergie thermique disposé dans la pièce pour mesurer la température de la pièce et comprenant un capteur de température pour fournir des informations de température et un circuit électronique pour traiter les informations de température,

   **caractérisée en ce que**
   chacun desdits premier et deuxième compteurs d'énergie thermique est configuré de manière à

   • effectuer des mesures de température instantanées à des intervalles fixés;
   • calculer après chaque mesure d'une température moyenne temporelle de mesures effectuées pour une période de temps jusqu'à présent, ladite période de temps étant commune pour lesdits premier et deuxième compteurs d'énergie thermique;
   • stocker ladite température moyenne temporelle dans un stockage de données; et
   • transférer la température moyenne temporelle à un autre circuit électronique;

   **en ce que** l'installation comprend en outre

   • un dispositif de lecture configuré de manière à lire à un moment donné la température moyenne temporelle stockée dans les stockages de données desdits premier et deuxième compteurs d'énergie thermique; et
   • un centrale configurée de manière à calculer à partir des températures moyennes temporelles lues à partir desdits premier et deuxième compteurs d'énergie thermique la consommation de chaleur pour une période de temps jusqu'audit moment donné.

10. Installation selon la revendication 9, **caractérisée en ce que** le compteur d'énergie thermique destiné à mesurer la température moyenne temporelle de la pièce est disposé à une distance du compteur pour mesurer la température de la source de chaleur.

11. Installation selon la revendication 9 ou 10, **caractérisée en ce qu'**un compteur d'énergie thermique destiné à mesurer la température moyenne temporelle de la pièce est disposé à proximité du compteur d'énergie thermique pour mesurer la température de la source de chaleur.

12. Installation selon les revendications 9 à 11, **caractérisée en ce que** les compteurs sont configurés de manière à pouvoir échanger des données via un réseau filaire.

13. Installation selon les revendications 9 à 12, **caractérisée en ce que** les compteurs sont configurés de manière à pouvoir échanger des données via une connexion radio.

Fig.1

Fig.2

```
┌─────────────────────┐                              ┌─────────────────────┐
│                    6│                              │                    8│
│ Measurement of      │                              │ Measurement of      │
│ mean temperature    │                              │ temperature of      │
│ of radiator         │                              │ room                │
└──────────┬──────────┘                              └──────────┬──────────┘
           │                                                    │
           ▼                                                    ▼
┌─────────────────────┐                              ┌─────────────────────┐
│                    7│                              │                    9│
│ Calculation of      │                              │ Calculation of time │
│ time mean temperature                              │ mean temperature of │
│ of radiator from τ=0│                              │ room from τ=0       │
│ to date             │                              │ to date             │
└──────────┬──────────┘                              └──────────┬──────────┘
           │                                                    │
           └────────────────────────┬───────────────────────────┘
                                     ▼
                          ┌─────────────────────┐
                          │                   10│
                          │ Calculation of Δτ   │
                          │ as average for period│
                          │ τ=0 to date         │
                          └──────────┬──────────┘
                                     ▼
                          ┌─────────────────────┐
                          │                   11│
                          │ Calculation of heat │
                          │ emission of radiator:│
                          │ Q=K·Δτ·exp(1,33)    │
                          └─────────────────────┘
```

9

Fig.3

Fig.4

## REFERENCES CITED IN THE DESCRIPTION

**Patent documents cited in the description**

- DE 4409185
- DE 2734406 A1

- WO 9722863 A